# EUROPÄISCHE PATENTSCHRIFT

(11) **EP 3 372 453 B1**
(45) Veröffentlichungstag und Bekanntmachung des Hinweises auf die Patenterteilung: **14.08.2019**
(21) Anmeldenummer: 18156214.1
(22) Anmeldetag: 12.02.2018
(51) Int. Cl.: B62D 5/04, B62D 5/00, B60R 16/023

(54) **STEER BY WIRE-SYSTEM UND VERFAHREN ZUM DATENAUSTAUSCH IN EINEM STEER BY WIRE-SYSTEM**
STEER BY WIRE SYSTEM AND METHOD FOR EXCHANGING DATA IN A STEER BY WIRE SYSTEM
SYSTÈME DE DIRECTION À COMMANDE ÉLECTRIQUE ET PROCÉDÉ D'ÉCHANGE DE DONNÉES DANS UN SYSTÈME DE DIRECTION À COMMANDE ÉLECTRIQUE

(30) Priorität: 07.03.2017 DE 102017203748
(43) Veröffentlichungstag der Anmeldung: 12.09.2018
(73) Patentinhaber: VOLKSWAGEN AKTIENGESELLSCHAFT, 38440 Wolfsburg (DE)
(72) Erfinder: Dreyer, Dirk, 31655 Stadthagen (DE)

(56) Entgegenhaltungen:
- WO-A1-2005/012063
- DE-C1- 10 135 736
- US-A1- 2007 045 035

## Beschreibung

Die Erfindung betrifft ein Steer by wire-System und ein Verfahren zum Datenaustausch in einem Steer by wire-System.

Steer by wire-Systeme sind dadurch gekennzeichnet, dass keine mechanische Wirkverbindung zwischen einer Lenkhandhabe und einem Lenk-Aktuator besteht. Der Lenk-Aktuator, beispielsweise ein Elektromotor, wird von einem ersten Steuergerät gesteuert. Der Elektromotor bringt dann beispielsweise eine Kraft auf eine Zahnstange auf, um die Räder auszulenken. An der Lenkhandhabe, beispielsweise einem Lenkrad, ist einen Sensorik zur Erfassung eines Lenkradwinkels angeordnet. Dieser Lenkradwinkel wird dem ersten Steuergerät übermittelt und daraus ein Soll-Lenkwinkel als Fahrerwunsch ermittelt und durch den Lenk-Aktuator umgesetzt. Des Weiteren ist es bekannt, der Lenkhandhabe einen Aktuator zuzuordnen, um ein haptisches Gegen-Moment an der Lenkhandhabe zu erzeugen, damit der Kraftfahrzeugführer ein haptisches Feed-Back auf seine Lenkbewegungen erhält. Dieser Aktuator ist beispielsweise ein Elektromotor, der durch ein zweites Steuergerät angesteuert wird. Dabei sollten die Systeme hinsichtlich der Vernetzung eigensicher ausgebildet sein, wofür zwei unabhängige Busverbindungen notwendig sind. Da der Aktuator an der Lenkhandhabe vorzugsweise auch ein haptisches Feed-Back der Straße bzw. der Fahrdynamik geben soll, wäre eine relativ schnelle Daten-Verbindung vom ersten Steuergerät zum zweiten Steuergerät wünschenswert. Dies stößt aber an Grenzen in üblichen Bussystemen mit vielen Steuergeräten.

Aus der DE 101 12 514 A1 ist ein X-by-wire-System für ein Fahrzeug bekannt, umfassend mindestens einen Sensor zur Erfassung einer Betätigung einer Eingabeeinrichtung, mindestens ein Steuergerät zur Ermittlung einer Sollstellwirkung und mindestens eine Energieversorgung, wobei Sensor, Steuergerät, Stellsystem und Energieversorgung jeweils redundant aus ersten und zweiten Modulen zusammengesetzt sind und die zwei Module eine Baugruppe bilden. Dabei sind die Module einer Baugruppe voneinander rückwirkungsfrei entkoppelt, wobei die ersten Module miteinander vernetzt sind und ein erstes Subsystem bilden und die zweiten Module miteinander vernetzt sind und ein zweites Subsystem bilden, wobei mindestens das zweite Subsystem ausschließlich aus den zweiten Modulen gebildet ist. Vorzugsweise findet die Kommunikation zwischen den Modulen über ein redundantes Bussystem statt.

Der Erfindung liegt das technische Problem zugrunde, ein Steer by wire-System zu schaffen, das Eigensicherheit bei hohen Übertragungsraten mit niedrigen Kosten ermöglicht. Ein weiteres technisches Problem ist es, ein Verfahren zum Datenaustausch in einem solchen Steer by wire-System zur Verfügung zu stellen.

Die Lösung des technischen Problems ergibt sich durch ein Steer by wire-System mit den Merkmalen des Anspruchs 1 sowie ein Verfahren mit den Merkmalen des Anspruchs 4. Weitere vorteilhafte Ausgestaltungen der Erfindung ergeben sich aus den Unteransprüchen.

Hierzu umfasst das Steer by wire-System ein erstes Steuergerät, das mindestens einen Lenk-Aktuator steuert, und mindestens ein zweites Steuergerät, das mindestens einen Aktuator an einer Lenkhandhabe steuert, um ein haptisches Moment zu erzeugen. Dabei ist dem zweiten Steuergerät eine Sensorik zur Erfassung eines Lenkradwinkels zugeordnet. Das erste Steuergerät ist mit einem ersten Bussystem verbunden und das zweite Steuergerät ist mit einem zweiten Bussystem verbunden, wobei die beiden Bussysteme über ein Gateway-Steuergerät miteinander verbunden sind. Weiter sind das erste und zweite Steuergerät über ein drittes Bussystem direkt miteinander verbunden. Über die beiden ersten Bussysteme sind die Steuergeräte eigensicher vernetzt, wobei durch die Verbindung über das Gateway-Steuergerät die ersten und zweiten Steuergeräte jeweils nur eine Busschnittstelle aufweisen müssen. Die zeitkritischen Daten können dann durch das dritte Bussystem übertragen werden, wobei aufgrund der Tatsache, dass nur zwei Steuergeräte kommunizieren, eine relativ hohe Datenübertragungsrate kein Problem darstellt. Vorzugweise weist daher auch das dritte Bussystem eine höhere Datenübertragungsrate auf als das erste und das zweite Bussystem. Vorzugsweise ist die Datenübertragungsrate mindestens doppelt so hoch wie die Datenübertragungsrate des ersten und des zweiten Bussystems.

In einer Ausführungsform ist das zweite Steuergerät derart ausgebildet, mindestens die Daten der Sensorik zusätzlich über das Gateway-Steuergerät an das erste Steuergerät zu übermitteln, wobei mindestens sicherheitsrelevante Daten zwischen dem ersten und zweiten Steuergerät über das dritte Bussystem ausgetauscht werden. Dadurch werden die Daten der Sensorik redundant übertragen, nämlich vom zweiten Steuergerät über das Gateway-Steuergerät und über das dritte Bussystem direkt zum ersten Steuergerät, d.h. auch bei Ausfall eines Bussystems liegen daher immer Daten der Sensorik dem ersten Steuergerät vor.

In einer weiteren Ausführungsform weisen mindestens das erste Steuergerät und der Lenk-Aktuator sowie das zweite Steuergerät und die Sensorik eine redundante Spannungsversorgung auf, sodass auch bei Ausfall einer Spannungsversorgung ein Lenkbetrieb möglich ist. Der Aktuator zur Erzeugung des Moments an der Lenkhandhabe ist nicht sicherheitsrelevant, sodass hier eine Redundanz entbehrlich ist, selbstverständlich aber trotzdem vorgesehen sein kann.

Die Erfindung wird nachfolgend anhand eines bevorzugten Ausführungsbeispiels näher erläutert. Die einzige Figur zeigt ein schematisches Blockschaltbild eines Steer by wire-Systems.

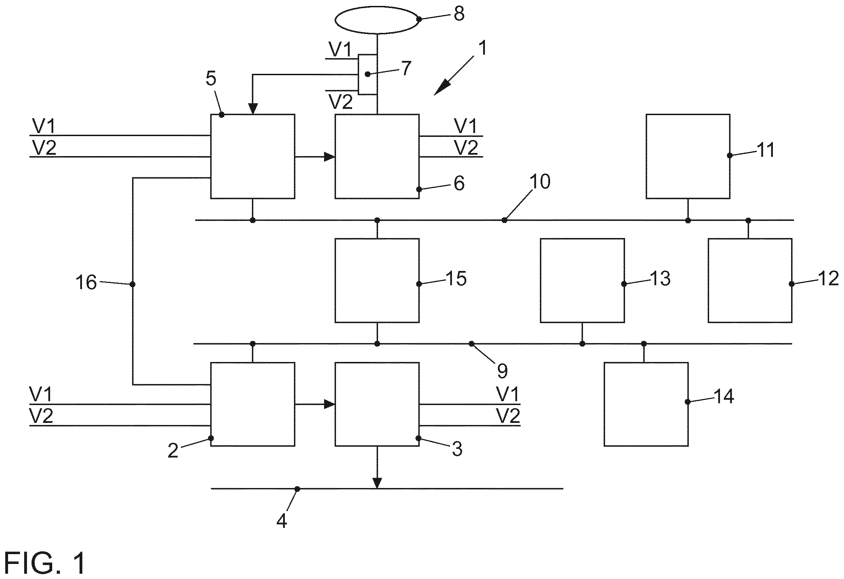

In der Fig. 1 ist ein Blockschaltbild eines Steer by wire-Systems 1 dargestellt. Das Steer by wire-System 1 umfasst ein erstes Steuergerät 2 und einen Lenk-Aktuator 3, der beispielsweise als Elektromotor ausgebildet ist und eine Kraft auf eine Zahnstange 4 überträgt. Weiter umfasst das Steer by wire-System 1 ein zweites Steuergerät 5, einen Aktuator 6, eine Sensorik 7 zur Erfassung eines Lenkradwinkels und eine Lenkhandhabe 8. Das zweite Steuergerät 5 steuert den Aktuator 6 an, wobei dieser ein haptisches Moment an der Lenkhandhabe 8 erzeugt. Dabei kann vorgesehen sein, dass verschiedene Kennlinien in dem zweiten Steuergerät 5 abgelegt sind, sodass je nach Übersetzungsverhältnis zwischen Lenkradwinkel und tatsächlichem Lenkwinkel an den Fahrzeugrädern ein unterschiedliches Moment an der Lenkhandhabe 8 eingestellt wird. Dabei können auch mechanische Endanschläge an der Lenkhandhabe 8 simuliert werden. Die Daten der Sensorik 7 werden an das zweite Steuergerät 5 übermittelt. Das erste Steuergerät 2 ist mit einem ersten Bussystem 9 und das zweite Steuergerät 5 ist mit einem zweiten Bussystem 10 verbunden, wobei an dem ersten und zweiten Bussystem 9, 10 weitere Steuergeräte 11-14 angeschlossen sind. Diese Steuergeräte 11-14 sind beispielsweise Steuergeräte von Assistenz-Systemen, die Lenkanforderungen generieren (z.B. Lane Departure Warning) oder Momente an der Lenkhandhabe generieren (z.B. Vibrationen gegen Müdigkeit). Dabei können Steuergeräte 11-14 auch mit beiden Bussystemen 9, 10 verbunden sein. Dabei existiert mindestens ein Gateway-Steuergerät 15, das mit beiden Bussystemen 9, 10 verbunden ist und Nachrichten von einem Bussystem auf das andere Bussystem routen kann.

Das erste Steuergerät 2 und das zweite Steuergerät 5 sind darüber hinaus direkt über ein drittes Bussystem 16 miteinander verbunden. Das erste Bussystem 9 und das zweite Bussystem 10 sind beispielsweise CAN-Bussysteme mit einer Datenübertragungsrate von 500 kBit/s. Das dritte Bussystem 16 ist beispielsweise auch ein CAN-Bussystem mit einer Datenübertragungsrate von 1 MBit/s. Prinzipiell können aber für das erste, zweite und dritte Bussystem andere Bussysteme als CAN zur Anwendung kommen.

Die einzelnen Komponenten des Steer by wire-Systems 1 sind darüber hinaus mit einer redundanten Spannungsversorgung V1, V2 ausgebildet, wobei die redundante Spannungsversorgung für den Aktuator 6 optional ist.

Die beiden Steuergeräte 2, 5 können nun bidirektional alle Daten über das schnelle dritte Bussystem 16 austauschen, die für das jeweils andere Steuergerät 5, 2 von Interesse sind, insbesondere auch die Daten der Sensorik 7. Zusätzlich werden die Daten der Sensorik 7 vom zweiten Steuergerät 5 über das zweite Bussystem 10 an das Gateway-Steuergerät 15 übertragen und von dort über das erste Bussystem 9 an das erste Steuergerät 2 übertragen, sodass die Daten der Sensorik 7 redundant an das erste Steuergerät 2 übertragen werden.

Das vorgestellte Steer by wire-System erlaubt eine schnelle Datenübertragung zwischen den beiden Steuergeräten 2, 5, wobei die Vernetzung eigensicher ist und die Daten der Sensorik 7 redundant übertragen werden, wobei die Steuergeräte 2, 5 nur zwei Netzwerkschnittstellen aufweisen müssen.

## Patentansprüche

1. Steer by wire-System (1), umfassend ein erstes Steuergerät (2), das mindestens einen Lenk-Aktuator (3) steuert, und mindestens ein zweites Steuergerät (5), das mindestens einen Aktuator (6) an einer Lenkhandhabe (8) steuert, um ein haptisches Moment zu erzeugen, wobei dem zweiten Steuergerät (5) eine Sensorik (7) zur Erfassung eines Lenkradwinkels zugeordnet ist, wobei das erste Steuergerät (2) mit einem ersten Bussystem (9) verbunden ist und das zweite Steuergerät (5) mit einem zweiten Bussystem (10) verbunden ist, **dadurch gekennzeichnet, dass** die beiden Bussysteme (9, 10) über ein Gateway-Steuergerät (15) miteinander verbunden sind und das erste Steuergerät (2) und das zweite Steuergerät (3) über ein drittes Bussystem (16) direkt miteinander verbunden sind.

2. Steer by wire-System nach Anspruch 1, **dadurch gekennzeichnet, dass** das zweite Steuergerät (2) derart ausgebildet ist, mindestens Daten der Sensorik (7) zusätzlich über das Gateway-Steuergerät (15) an das erste Steuergerät (2) zu übermitteln, wobei mindestens sicherheitsrelevante Daten zwischen dem ersten Steuergerät (2) und dem zweiten Steuergerät (5) über das dritte Bussystem (16) ausgetauscht werden.

3. Steer by wire-System nach Anspruch 1 und 2, **dadurch gekennzeichnet, dass** mindestens das erste Steuergerät (2) und der Lenk-Aktuator (3) sowie das zweite Steuergerät (5) und die Sensorik (7) eine redundante Spannungsversorgung (V1, V2) aufweisen.

4. Verfahren zum Datenaustausch in einem Steer by wire-System (1), mittels eines ersten Steuergeräts (2), das mindestens einen Lenk-Aktuator (3) steuert, und mittels eines zweiten Steuergeräts (5), das mindestens einen Aktuator (6) an einer Lenkhandhabe (8) steuert, um ein haptisches Moment zu erzeugen, wobei dem zweiten Steuergerät (5) eine Sensorik (7) zur Erfassung eines Lenkradwinkels zugeordnet ist, wobei das erste Steuergerät (2) mit einem ersten Bussystem (9) verbunden ist und das zweite Steuergerät (5) mit einem zweiten Bussystem (10) verbunden ist, **dadurch gekennzeichnet, dass** die beiden Bussysteme (9, 10) über ein Gateway-Steuergerät (15) miteinander verbunden sind und das erste Steuergerät (2) und das zweite Steuergerät (5) über ein drittes Bussystem (16) direkt miteinander verbunden sind, wobei mindestens Daten der Sensorik (7) zusätzlich über das Gateway-Steuergerät (15) an das erste Steuergerät (2) übermittelt werden, wobei mindestens sicherheitsrelevante Daten zwischen dem ersten Steuergerät (2) und dem zweiten Steuergerät (5) über das dritte Bussystem (16) ausgetauscht werden.

## Claims

1. A steer-by-wire system (1), comprising a first control device (2), which controls at least one steering actuator (3), and at least one second control device (5), which controls at least one actuator (6) on a steering handle (8), in order to generate a haptic torque, wherein a sensor system (7) for detecting a steering wheel angle is associated with the second control device (5), wherein the first control device (2) is connected to a first bus system (9) and the second control device (5) is connected to a second bus system (10), **characterized in that** the two bus systems (9, 10) are connected to one another via a gateway control device (15) and the first control device (2) and the second control device (3) are directly connected with one another via a third bus system (16).

2. The steer-by-wire system according to Claim 1, **characterized in that** the second control device (2) is designed in such a manner as at least to transmit data of the sensor system (7) additionally via the gateway control device (15) to the first control device (2), wherein at least safety-relevant data are exchanged between the first control device (2) and the second control device (5) via the third bus system (16).

3. The steer-by-wire system according to Claim 1 and 2, **characterized in that** at least the first control device (2) and the steering actuator (3) as well as the second control device (5) and the sensor system (7) have a redundant voltage supply (V1, V2).

4. A method for the data exchange in a steer-by-wire system (1), by means of a first control device (2), which controls at least one steering actuator (3), and by means of a second control device (5), which controls at least one actuator (6) on a steering handle (8), in order to generate a haptic torque, wherein a sensor system (7) for detecting a steering wheel angle is associated with the second control device (5), wherein the first control device (2) is connected to a first bus system (9) and the second control device (5) is connected to a second bus system (10), **characterized in that** the two bus systems (9, 10) are connected with one another via a gateway control device (15) and the first control device (2) and the second control device (5) are directly connected with one another via a third bus system (16), wherein at least data of the sensor system (7) are additionally transmitted via the gateway control device (15) to the first control device (2), wherein at least safety-relevant data are exchanged between the first control device (2) and the second control device (5) via the third bus system (16).

## Revendications

1. Système de direction par câble (1), comprenant un premier appareil de commande (2), qui contrôle au moins un actionneur de direction (3), et au moins un deuxième appareil de commande (5), qui contrôle au moins un actionneur (6) au niveau d'une poignée de direction (8), afin de générer un couple haptique, le deuxième appareil de commande (5) étant muni d'un ensemble de capteurs (7) pour la mesure d'un angle de volant de direction, le premier appareil de commande (2) étant relié avec un premier système de bus (9) et le deuxième appareil de commande (5) étant relié avec un deuxième système de bus (10), **caractérisé en ce que** les deux systèmes de bus (9, 10) sont reliés entre eux par l'intermédiaire d'un appareil de commande passerelle (15) et le premier appareil de commande (2) et le deuxième appareil de commande (3) sont reliés directement entre eux par l'intermédiaire d'un troisième système de bus (16).

2. Système de direction par câble selon la revendication 1, **caractérisé en ce que** le deuxième appareil de commande (2) est en outre conçu de façon à transmettre au moins les données de l'ensemble de capteur (7), par l'intermédiaire de l'appareil de commande passerelle (15), au premier appareil de commande (2), au moins les données importantes pour la sécurité étant échangées entre le premier appareil de commande (2) et le deuxième appareil de commande (5) par l'intermédiaire du troisième système de bus (16).

3. Système de direction par câble selon la revendication 1 et 2, **caractérisé en ce qu'**au moins le premier appareil de commande (2) et l'actionneur de direction (3) ainsi que le deuxième appareil de commande (5) et l'ensemble de capteurs (7) comprennent une alimentation de tension redondante (V1, V2).

4. Procédé d'échange de données dans un système de direction apr câble (1), au moyen d'un premier appareil de commande (2), qui contrôle au moins un actionneur de direction (3), et au moyen d'un deuxième appareil de commande (5), qui contrôle au moins un actionneur (6) au niveau d'une poignée de direction (8), afin de générer un couple haptique, le deuxième appareil de commande (5) étant muni d'un ensemble de capteurs (7) pour la mesure d'un angle de volant de direction, le premier appareil de commande (2) étant relié avec un premier système de bus (9) et le deuxième appareil de commande (5) étant relié avec un deuxième système de bus (10), **caractérisé en ce que** les deux systèmes de bus (9, 10) sont reliés entre eux par l'intermédiaire d'un appareil de commande passerelle (15) et le premier appareil de commande (2) et le deuxième appareil de commande (3) sont reliés directement entre eux par l'intermédiaire d'un troisième système de bus (16), au moins les données de l'ensemble de capteur (7) étant en outre transmises, par l'intermédiaire de l'appareil de commande passerelle (15), au premier appareil de commande (2), au moins les données importantes pour la sécurité étant échangées entre le premier appareil de commande (2) et le deuxième appareil de commande (5) par l'intermédiaire du troisième système de bus (16).
